# EUROPEAN PATENT SPECIFICATION

(11) **EP 3 037 205 B1**
(45) Date of publication and mention of the grant of the patent: **27.06.2018**
(21) Application number: 15003406.4
(22) Date of filing: 30.11.2015
(51) Int. Cl.: B23K 35/30, B23K 35/02, C22C 38/02, C22C 38/04, C22C 38/44, C22C 38/46, C22C 38/48, C22C 38/06, C22C 38/08, C22C 38/10, C22C 38/12, C22C 38/16, C22C 38/20, C22C 38/22, C22C 38/24, C22C 38/26, C22C 38/28, C22C 38/30, C22C 38/32, B23K 103/04

(54) **WIRE FOR GAS SHIELD ARC WELDING**
DRAHT ZUM SCHUTZGASLICHTBOGENSCHWEISSEN
FIL POUR SOUDAGE À L'ARC SOUS PROTECTION GAZEUSE

(30) Priority: 25.12.2014 JP 2014263700; 16.06.2015 JP 2015121096
(43) Date of publication of application: 29.06.2016
(73) Proprietor: Kabushiki Kaisha Kobe Seiko Sho (Kobe Steel, Ltd.), Kobe-shi, Hyogo 651-8585 (JP)
(72) Inventor: TANIGUCHI, Genichi, Fujisawa-shi Kanagawa, 251-8551 (JP); YAMASHITA, Ken, Fujisawa-shi Kanagawa, 251-8551 (JP)
(74) Representative: Müller-Boré & Partner Patentanwälte PartG mbB

(56) References cited:
- JP-A- 2001 192 761
- JP-B2- 3 375 817
- US-A1- 2005 257 853

## Description

The present invention relates to a wire for gas shielding arc welding to be used in welding a high-Cr ferritic heat-resistant steel, which is mainly applied to piping in a thermal power boiler.

Mod.9Cr-1Mo steel, which is the high-Cr ferritic heat-resistant steel, has excellent high-temperature strength and corrosion resistance and thus is applied to piping in a thermal power boiler under a high temperature environment. Mod.9Cr-1Mo steel, however, is subjected to gas shield arc welding and sometimes has cracks in the process of solidification of weld metal. This is the so-called "hot cracking". The invention aiming to improve the disadvantage of the hot cracking is proposed, for example, in JP 64-11092 A.

Specifically, JP 64-11092 A discloses a wire for welding a 9Cr-1Mo steel, the wire including, in percent by mass: C: 0.02 to 0.18%; Si: 0.03 to 0.70%; Mn: 0.90 to 2.50%; Cr: 8.0 to 11.0%; Mo: 0.80 to 0.95%; Ni: 1.5% or less; Nb: 0.01 to 0.15%; V: 0.01 to 0.50%; N: 0.004 to 0.060%; and further in a restricted content, Ti: 0.010% or less; and O: 0.024% or less, in which the total content of La, Ce, and Mg is restricted to 0.030% or less, and the relationship below is satisfied: (Mo + Ni) ≤ 2.10%, with the balance being Fe and inevitable impurities.

The invention disclosed in JP 64-11092 A focuses on a synergistic effect of Ni and Mo on the hot cracking and is adapted to suppress the total amount of Mo and Ni to 2.10% or less as mentioned above, thereby improving the resistance to hot cracking.

A wire for gas shield arc welding that is used to weld Mod.9Cr-1Mo steel, which is applied to the piping in thermal power boilers, is required to have not only high resistance to hot cracking, but also high strength at high temperatures (or high creep strength) and high toughness. The inventions aimed to improve the high-temperature strength and the toughness are proposed, for example, in JP 7-96390 A and JP 2005-329415.

Specifically, JP 7-96390 A discloses an improved welding wire for 9Cr-1Mo steel, including, in percent by mass: C: 0.03 to 0.18%; Si: 0.06 to 0.80%; Mn: 0.85 to 2.00%; Cr: 8.00 to 11.0%; Mo: 0.80 to 1.20%; Ni: 0.03 to 1.00%; Nb: 0.010 to 0.250%; V: 0.02 to 0.50%; N: 0.026 to 0.10%; and O: 0.002 to 0.030%, wherein an Al content is limited to 0.020% or less, and a Mn content, a Ni content, and a N content satisfy the relation of (Mn + 2Ni - 10N) of 3.00% or less, with the balance being Fe and inevitable impurities.

The invention proposed in JP 7-96390 A focuses on the influences of Mn, Ni, and N on the creep strength and toughness and is adapted to restrict the content of (Mn + 2Ni - 10N) to 3.00% or less as mentioned above, thereby achieving both the adequate creep strength and toughness.

Specifically, JP 2005-329415 A discloses an improved welding wire for a 9Cr-1Mo steel, the wire including: C: 0.070 to 0.150% by mass; Si: more than 0.15% by mass and 0.30% by mass or less; Mn: 0.30% by mass or more and less than 0.85% by mass; Ni: 0.30 to 1.20% by mass; Cr: 8.00 to 13.00% by mass; Mo: 0.30 to 1.40% by mass; V: 0.03 to 0.40% by mass; Nb: 0.01 to 0.15% by mass; and N: 0.016 to 0.055% by mass, wherein a total content of Mn and Ni is restricted to 1.50% by mass or less; P: 0.010% by mass or less; S: 0.010% by mass or less; Cu: less than 0.50% by mass; Ti: 0.010% by mass or less; Al: less than 0.10% by mass; B: less than 0.0010% by mass; W: less than 0.10% by mass; Co: less than 1.00% by mass; and O: 0.03% by mass or less, with the balance being Fe and inevitable impurities.

The invention proposed in JP 2005-329415 A handles P, S, Cu, Ti, and Al elements as impurities and restricts the contents of these elements, thereby achieving adequate resistance to hot cracking, creep strength, and toughness.

However, in the feature of the present invention disclosed in JP 64-11092 A, the temperature of a post-weld heat treatment (PWHT) is low, e.g., 750°C, and holding time therefor is short, e.g., 1 hr. Thus, the conditions proposed by the present invention mentioned in JP 64-11092 A particularly differ from the actual conditions of the PWHT performed for producing boilers overseas, and are disadvantageously inappropriate for evaluating the mechanical performance of welds.

On the other hand, the hot cracking that would be easily generated during welding of the Mod.9Cr-1Mo steel should be considered to the same extent as the creep strength and toughness. However, the present invention disclosed in JP 7-96390 A disadvantageously fails to clearly describe the detriment of the hot cracking and does not seem to sufficiently consider the weldability of real machines.

Further, the present invention proposed in JP 2005-329415 A evaluates the hot cracking for all-weld-metal test specimens subjected to welding with a little restraint (submerged arc welding; SAW) or with no restraint (gas tungsten arc weld; GTAW) in examples. These specimens differ from the conditions of welding of real machines in which a weld zone is subjected to strong restraint. Thus, the present invention mentioned in JP 2005-329415 A does not seem to consider the hot cracking of the wire. The invention set forth in JP 2005-329415 A is characterized by setting a Cr content to a wide range of 8.0 to 13.0% by mass. It is obvious that particularly in the Cr content exceeding 10.5% by mass, a δ ferrite phase remains in the weld metal, degrading the creep strength.

Not only the wires proposed in the inventions disclosed in JP 64-11092 A, JP 7-96390 A, and JP 2005-329415 A, but also wires for gas shield arc welding are required not to have, in weld zones, any appearance failures, such as poor fitness and slag, flaws (cracks), and internal defects, such as incomplete fusion and blow holes. That is, the wires are required to produce sound weld zones.
Moreover, JP 3375817 B2 describes welding wire for high chrome ferrite wire.

The present invention has been made in light of the above circumstances. Therefore, it is an object of the present invention to provide a wire for gas shield arc welding that produces sound weld zones without causing hot cracking during welding while exhibiting excellent creep strength and toughness after the PWHT.

Wires for gas shield arc welding are required to achieve both adequate toughness and creep strength of the weld metal while exhibiting excellent weldability. The inventors have diligently studied and developed weld wires to achieve both the adequate toughness and creep strength. This object is attained by the findings and approaches below.

A wire for gas shield arc welding tends to have hot cracking during welding. Particularly, such hot cracking is more likely to occur, particularly, at a crater produced in GTAW or at the surface of or inside a weld bead in gas metal arc welding (GMAW). This is because, since the Cr content is relatively high, e.g., approximately 9% by mass, the solidification completion temperature in the welding becomes lower, making it difficult for the whole weld metal to spread over the final solidification zone, along with the progress in solidification, causing cracks in the zone. Low-melting-point compounds are condensed at the final solidification zone, which increases its sensitivity.

The microstructure of the weld metal formed by the wire for gas shield arc welding of the Mod.9Cr-1Mo steel mainly includes martensite and has high hardness and low toughness in the welded state. Thus, by applying the PWHT, the microstructure is recovered to precipitate carbonitrides, thereby improving the toughness and creep strength of the weld metal.

Accordingly, the inventors have designed chemical components of a wire for gas shield arc welding, while aiming to obtain weld metal with excellent toughness and creep strength after the PWHT without generating hot cracking during welding.

In order to improve the resistance to hot cracking in terms of the design of components of the material, it is effective (1) to reduce the content of elements for forming low-melting-point compounds at the final solidification zone, or (2) to reduce the content of elements for reducing the solidification completion temperature. To achieve the feature (1), it is efficient to reduce the contents of impurities, such as P and S. However, these impurities are already managed at a sufficiently low level in terms of industry and cannot be reduced any more with ease from the viewpoint of the smelting capacity.

To achieve the feature (2), it is efficient to reduce the content of main alloy components, such as C and Cr. However, either of the alloy elements is essential for ensuring the adequate creep strength. The contents of these alloy elements cannot be easily reduced. Meanwhile, alloy elements other than C and Cr leave room for improvement. Accordingly, in the present invention, a study has been made of the feature (2) about alloy elements other than C and Cr.

In order to improve the creep strength, it is effective (3) to reduce the content of a soft δ ferrite phase, or (4) to increase the amount of precipitation of the carbonitrides.

To achieve the feature (3), it is effective to reduce the content of an alloy component, such as Si, Cr, or Mo, for stabilization of a ferrite phase, or to increase the content of an alloy component, such as Mn, Ni, or Co, that makes an austenite phase stable and a ferrite phase relatively unstable. It is to be noted that some of these alloy elements change the amount of precipitation of carbonitrides, affecting the toughness and the creep properties of the weld metal. The term "carbonitride" as used herein mainly means a composite compound of a carbide and a nitride of Nb or V.

To achieve the feature (4), it is effective to increase the content of elements for formation of carbonitrides, such as Cr, Nb, or V. However, the increase in amount of precipitation of the carbonitrides degrades the toughness of the weld metal. For this reason, in the present invention, a study has been made of alloy elements that improve the creep strength without affecting the amount of precipitation of carbonitrides.

As a result of various intensive studies, the inventors have made it clear that Ni is concentrated at the final solidification zone in the welding to reduce the solidification completion temperature, thus promoting the hot cracking. Further, it is clearly proved that Ni does not affect the amount of precipitation of carbonitrides during the PWHT, but makes the carbonitrides unstable, promotes growth of crystals of the metal to decrease a surface area per unit volume as much as possible, which is called the "Ostwald growth", assisting in coarsening of the crystal grains, thus degrading the creep strength. Thus, by designing the composition of the wire for gas shield arc welding to decrease the content of Ni, hot cracking is suppressed, and the amount of precipitation of carbonitrides is not affected, suceeding in not degrading the toughness of the weld metal, and the carbonitrides are stabilized, succeeding in improvement of the creep strength.

In addition to the above, the Cr content is restricted to a specific range to suppress the increase in the rate of δ ferrite phase that would be caused by decreasing the Ni content, which achieves the adequate creep strength, toughness, and weldability (resistance to hot cracking). For example, JP 2005-329415 A specifies that "the Ni content is set to 0.30 to 1.20% (preferably, 0.40 to 1.00%), and the Cr content is set to 8.00 to 13.00%."

On the contrary, the present invention is characterized by specifying that "the Ni content is 0.20% or less, and the Cr content is 8.00 to 10.50% (preferably, 8.00 to 9.50%)" to achieve various features.

The wire for gas shield arc welding according to the present invention, which has solved the above-mentioned problems by the findings and attempts mentioned above, consists of in percent by mass: C: 0.07 to 0.13%; Si: 0.10 to 0.50%; Mn: 0.55 to 1.00%; S: 0.002 to 0.010%; Cr: 8.00 to 10.50%; Mo: 0.85 to 1.20%; V: 0.15 to 0.30%; Nb: 0.02 to 0.10%; and N: 0.03 to 0.07%; Ni: 0.20% or less; P: 0.010% or less; Cu: 0.30% or less; Al: 0.04% or less; B: 0.0015% or less; and O: 0.030% or less, the total of Mn content and Ni content being in a range of 0.60 to 1.15%, the ratio of the Mn content to the S content being 87 or more, preferably 150 or more, with the balance being Fe and inevitable impurities.

As mentioned above, any of the wires for gas shield arc welding according to the present invention controls the contents of the chemical components, the total of the Mn content and the Ni content, and the ratio of the Mn content to the S content in the respective ranges, and thus can have the excellent creep strength and toughness after the PWHT without causing hot cracking during welding.

In any of the wires for gas shield arc welding in the present invention as mentioned above, the C content is preferably set at 0.08 to 0.11%.

In any of the wires for gas shield arc welding in the present invention as mentioned above, the Cr content is preferably set at 8.21 to 10.50%.

In any of the wires for gas shield arc welding in the present invention as mentioned above, the total of Mn content and Ni content is preferably set at 0.70 to 1.00%.

In any of the wires for gas shield arc welding in the present invention as mentioned above, the Cu content is preferably restricted to 0.10% or less.

In any of the wires for gas shield arc welding in the present invention as mentioned above, the Al content is preferably restricted to 0.03% or less.

In any of the wires for gas shield arc welding in the present invention as mentioned above, the N content is preferably set at 0.04 to 0.07%.

Any of the wires for gas shield arc welding in the present invention as mentioned above optionally has the composition restricted as follows: Sn: 0.015% or less; As: 0.015% or less; and Sb: 0.015% or less.

Any of the wires for gas shield arc welding in the present invention as mentioned above optionally has the composition restricted as follows: Pb: 0.0015% or less; and Bi: 0.0015% or less.

Any of the wires for gas shield arc welding in the present invention as mentioned above optionally includes: Ti: 0.010 to 0.030%. In this way, the weld metal can improve its creep strength.

Any of the wires for gas shield arc welding in the present invention as mentioned above optionally includes: Co: 0.10 to 0.75%. Thus, the δ ferrite phase can be prevented from remaining in the weld metal. In this way, the weld metal can improve its creep strength.

According to the present invention, the wire for gas shield arc welding produces sound weld zones while exhibiting excellent creep strength and toughness after the PWHT without causing any hot cracking during welding.

Fig. 1 is a schematic diagram showing the shape of a groove of a weld test plate subjected to GTAW.
Fig. 2A is a schematic diagram showing the shape of a creep test specimen.
Fig. 2B is an enlarged view of an A part shown in Fig. 2A.
Fig. 3 is a schematic diagram showing test-specimen sampling positions of a Charpy impact test specimen and the creep test specimen that are subjected to the GTAW.
Fig. 4A is a schematic diagram (front view) showing the shape of a groove of a weld test plate subjected to evaluation of the resistance to hot cracking (hereinafter referred to as a crater cracking test) in the GTAW.
Fig. 4B is a schematic diagram (plan view) showing the shape of the groove of the weld test specimen subjected to evaluation of the resistance to hot cracking in the GTAW.
Fig. 5 is a schematic diagram showing the shape of a groove of a weld test plate subjected to GMAW.
Fig. 6 is a schematic diagram showing test-specimen sampling positions of a Charpy impact test specimen and a creep test specimen that are subjected to the GMAW.
Fig. 7A is a schematic diagram (front view) showing the shape of a groove of the weld test plate subjected to evaluation of the resistance to hot cracking in the GMAW.
Fig. 7B is a schematic diagram (plan view) showing the shape of the groove of the weld test plate subjected to evaluation of the resistance to hot cracking in the GMAW.

Embodiments for carrying out a wire for gas shield arc welding (hereinafter simply referred to a "welding wire") according to the present invention will be described in detail below.

### [Embodiment of Welding Wire]

A welding wire in the present embodiment consists of, in percent by mass: C: 0.07 to 0.13%; Si: 0.10 to 0.50%; Mn: 0.55 to 1.00%; S: 0.002 to 0.010%; Cr: 8.00 to 10.50%; Mo: 0.85 to 1.20%; V: 0.15 to 0.30%; Nb: 0.02 to 0.10%; N: 0.03 to 0.07%; Ni: 0.20% or less; P: 0.010% or less; Cu: 0.30% or less; Al: 0.04% or less; B: 0.0015% or less; O: 0.030% or less, with the balance being Fe and inevitable impurities, a total of the Mn content and the Ni content being in a range of 0.60 to 1.15%, a ratio of the Mn content to the S content being 87 or more.

Note that it is preferred that the chemical components of the wire be set as mentioned above and that the ratio of the Mn content to the S content be 150 or more.

A description will be made of the individual reasons for controlling the chemical components included in the welding wire, the contents of these chemical components, the total of Mn content and Ni content, and the ratio of the Mn content to the S content.

### (C: 0.07 to 0.13%)

Carbon (C) serves as an austenite stabilizing element while significantly affecting the hardenability of weld metal and the amount of precipitation of carbonitrides therein, thereby preventing the δ ferrite phase from remaining in the weld metal. When the C content in the weld metal is low, the amount of precipitation of carbides becomes insufficient, and the δ ferrite phase remains, which cannot attain the predetermined creep strength. On the other hand, when the C content is excessively high, the hot cracking susceptibility is enhanced, and the amount of precipitation of the carbides is increased, which drastically increases the strength of the weld metal, degrading its toughness. Accordingly, the C content is set at 0.07 to 0.13%. The lower limit of C content is preferably 0.08%, and the upper limit of C content is preferably 0.11%.

### (Si: 0.10 to 0.50%)

Silicon (Si) serves as a deoxidizing agent while improving the fitness of weld beads and increases the strength and toughness of the weld metal. When the Si content in the weld metal is excessively low, the welding workability (for example, the fitness and fusion properties of the weld beads) is degraded, and the creep strength and toughness of the weld metal become deteriorated. On the other hand, any excessive Si content drastically increases the strength of the weld metal, degrading its toughness. Accordingly, the Si content is set at 0.10 to 0.50%. The lower limit of Si content is preferably 0.18%, and the upper limit of Si content is preferably 0.41%.

### (Mn: 0.55 to 1.00%)

### (Ni: 0.20% or less)

### (Total of Mn content and Ni content: 0.60 to 1.15%)

Manganese (Mn) serves as a deoxidizing agent, like Si, and improves the toughness of the weld metal. Nickel (Ni) refines the microstructure to thereby improve the toughness of the weld metal. Further, Mn serves as an austenite stabilizing element, thereby preventing the δ ferrite phase from remaining in the weld metal. When the Mn content or Ni content in the weld metal is excessively low, the weld metal cannot attain the predetermined toughness, and the soft δ ferrite phase might remain in the weld metal, thereby degrading the creep strength of the weld metal. On the other hand, when the Mn content and the Ni content in the weld metal are excessively high, the carbonitrides become unstable, reducing the creep strength of the weld metal. Mn also has the effect of relieving the adverse effect on the resistance to hot cracking of S as will be mentioned later. Accordingly, the Mn content is set at 0.55 to 1.00%. The lower limit of Mn content is preferably 0.60%, and the upper limit of Mn content is preferably 0.80%.

Ni lowers the solidification completion temperature to enhance the hot cracking susceptibility. Accordingly, the Ni content is restricted to 0.20% or less.

To ensure the toughness of the weld metal, reduce the content of δ ferrite phase, and obtain the adequate creep strength, it is effective to manage the total of the Mn and improves the toughness of the weld metal. Nickel (Ni) refines the microstructure to thereby improve the toughness of the weld metal. Further, Mn serves as an austenite stabilizing element, thereby preventing the δ ferrite phase from remaining in the weld metal. When the Mn content or Ni content in the weld metal is excessively low, the weld metal cannot attain the predetermined toughness, and the soft δ ferrite phase might remain in the weld metal, thereby degrading the creep strength of the weld metal. On the other hand, when the Mn content and the Ni content in the weld metal are excessively high, the carbonitrides become unstable, reducing the creep strength of the weld metal. Mn also has the effect of relieving the adverse effect on the resistance to hot cracking of S as will be mentioned later. Accordingly, the Mn content is set at 0.55 to 1.00%. The lower limit of Mn content is preferably 0.60%, and the upper limit of Mn content is preferably 0.80%.

Ni lowers the solidification completion temperature to enhance the hot cracking susceptibility. Accordingly, the Ni content is restricted to 0.50% or less. The Ni content is preferably restricted to 0.20% or less.

To ensure the toughness of the weld metal, reduce the content of δ ferrite phase, and obtain the adequate creep strength, it is effective to manage the total of the Mn content and the Ni content. That is, from the viewpoint of ensuring the toughness, the lower limit of the total of the Mn content and the Ni content needs to be specified. On the other hand, from the viewpoint of reducing the content of 5 ferrite phase and attaining the adequate creep strength, the upper limit of the total of the Mn content and the Ni content also needs to be specified. Specifically, the total of Mn content and Ni content is set at 0.60 to 1.15%. The lower limit of the total of Mn content and Ni content is preferably 0.70%, while the upper limit thereof is preferably 1.00%.

### (S: 0.002 to 0.010%)

### (Ratio of Mn Content / S Content: 87 or more)

Sulfur (S) binds to Fe during welding to form a low-melting-point eutectic of Fe-FeS at the final solidification zone, which enhances hot cracking and makes the weld metal brittle, degrading the toughness of the weld metal. On the other hand, S has the effect of improving the fitness and fusion properties of the weld beads. When the S content is excessively small, S cannot exhibit the effects of improving the fitness and the fusion properties. Accordingly, the S content is set at 0.002 to 0.010%. The lower limit of S content is preferably 0.003%, and the upper limit of S content is preferably 0.007%. Mn binds to S during the weld solidification process to form MnS, which relieves the adverse effects mentioned above to reduce the hot cracking. To obtain these effects, the ratio of the Mn content to the S content needs to be 87 or more. As mentioned above, the ratio of the Mn content to the S content is preferably 150 or more, and more preferably 156 or more.

### (Cr: 8.00 to 10.50%)

Chrome (Cr) forms carbonitrides during the PWHT to thereby increase the creep strength of the weld metal. When the Cr content is excessively small, the amount of precipitation of the carbonitrides is lacking, which cannot attain the predetermined creep strength of the weld metal. On the other hand, when the Cr content becomes large, the solidification completion temperature is decreased to enhance the hot cracking susceptibility, while allowing the δ ferrite phase to remain in the weld metal, degrading the creep strength. Accordingly, the Cr content is set at 8.00 to 10.50%. The lower limit of Cr content is preferably 8.21%, and the upper limit of Cr content is preferably 9.56%.

### (Mo: 0.85% to 1.20%)

Molybdenum (Mo) is solid-soluted into a Cr-based carbide or a mother phase during the PWHT to thereby improve the creep strength of the weld metal. When the Mo content is too small, the predetermined creep strength is not obtained. On the other hand, when the Mo content becomes large, the amount of solid-soluted Mo into the Cr-based carbide and the mother phase is excessively increased, which drastically enhances the strength of the weld metal, but degrades the toughness of the weld metal. Accordingly, the Mo content is set at 0.85 to 1.20%. The lower limit of Mo content is preferably 0.94%, and the upper limit of Mo content is preferably 1.05%.

### (V: 0.15 to 0.30%)

Vanadium (V) forms carbonitrides during the PWHT to thereby improve the creep strength of the weld metal. When the V content is too small, the predetermined creep strength is not obtained. On the other hand, when the V content becomes large, the amount of precipitation of the carbonitrides is excessively increased, which enhances the strength of the weld metal, but degrades the toughness of the weld metal. Accordingly, the V content is set at 0.15 to 0.30%. The lower limit of V content is preferably 0.21%, and the upper limit of V content is preferably 0.27%.

### (Nb: 0.02 to 0.10%)

Niobium (Nb) forms carbonitrides during the PWHT, like V, to thereby improve the creep strength of the weld metal. When the Nb content is too small, the predetermined creep strength is not obtained. On the other hand, when the Nb content becomes large, the amount of precipitation of the carbonitrides is excessively increased, which enhances the strength of the weld metal, but degrades the toughness of the weld metal. Accordingly, the Nb content is set at 0.02 to 0.10%. The lower limit of Nb content is preferably 0.04%, and the upper limit of Nb content is preferably 0.07%.

### (N: 0.03 to 0.07%)

Nitrogen (N) binds to Cr, V, Nb, etc., to form carbonitrides during the PWHT to thereby improve the creep strength of the weld metal. When the N content is too small, the predetermined creep strength is not obtained. On the other hand, when the N content becomes large, the amount of precipitation of the carbonitrides is excessively increased, which enhances the strength of the weld metal, but degrades the toughness of the weld metal. Further, when the N content is excessively large, N₂ gas generated during the welding process tends to be retained in the weld metal, generating blowholes. Accordingly, the N content is set at 0.03 to 0.07%. The lower limit of N content is preferably 0.04%, and the upper limit of N content is preferably 0.06%.

### (P: 0.010% or less)

Phosphorus (P) forms a low-melting-point compound at the final solidification zone during welding, thereby enhancing the hot cracking susceptibility, while making the weld metal brittle to degrade the toughness of the weld metal. Accordingly, the P content is restricted to 0.010% or less. The P content is preferably restricted to 0.0006% or less.

### (Cu: 0.30% or less)

When the Cu content in the welding wire is increased, the Cu content in the weld metal is also increased, thus degrading the toughness of the weld metal. Accordingly, the Cu content is restricted to 0.30% or less. The Cu content is preferably 0.10% or less. Note that when applying a Cu coating on the surface of a welding wire by methods, such as electroplating, to improve the welding-wire feeding properties during the welding, the "Cu content" as used herein means the content of Cu, including not only Cu contained in the welding wire, but also the coated Cu. In this case, the Cu content is restricted to 0.30% or less as mentioned above.

### (Al: 0.04% or less)

Aluminum (Al) serves as a deoxidizing element and binds to O in the weld metal during the solidification process to increase the amount of generated slags. Al forms coarsen oxides in the weld metal and acts as a starting point of brittle fracture to degrade the toughness of the weld metal. Further, Al binds to N to form AlN, which reduces the amount of precipitation of carbonitrides of Cr, Nb or V that is essential for ensuring the adequate creep strength, thus degrading the creep strength of the weld metal. Accordingly, the Al content is restricted to 0.04% or less. The Al content is preferably 0.03% or less.

### (B: 0.0015% or less)

Boron (B) reduces the final solidification temperature during the welding to enhance the hot cracking susceptibility. Accordingly, the B content is restricted to 0.0015% or less. Further, the B content is preferably restricted to 0.0003% or less.

### (O: 0.030% or less)

Oxygen (O) binds to Si, Mn, Al, etc., during the solidification process in the welding to form oxides, increasing the amount of slags. The thus-formed oxide acts as a starting point of brittle fracture to degrade the toughness of the weld metal. Accordingly, the O content is restricted to 0.030% or less. Further, the O content is preferably restricted to 0.005% or less.

### (Balance)

The basic components of the composition forming the welding wire in the present invention have been mentioned above. The balance of the welding wire consists of Fe and inevitable impurities. Inevitable impurities are unavoidably mixed during smelting and are possibly contained in such a range that does not impair various properties of the welding wire. Examples of the inevitable impurities can include Ti, Co, W, Sn, Sb, As, Pb, Bi, etc. These elements adversely affect essential properties, including the resistance to hot cracking, the toughness, and the creep strength. However, if the contents of such elements are restricted to the respective predetermined levels or less, the above essential properties are not adversely affected. Thus, each of these elements is allowed to be included in a corresponding predetermined content or less. Specifically, the allowable contents of these elements as the inevitable impurities are as follows: Ti: less than 0.010%; Co: less than 0.10%; W: less than 0.10%; each of Sn, Sb, and As: 0.015% or less; and each of Pb and Bi: 0.0015% or less. Note that in the present invention, as long as the effects of the present invention are not interrupted, any elements other than the above inevitable impurities may be positively contained (that is, which falls within the technical scope of the present invention).

Here, titanium (Ti) and cobalt (Co) have the adverse effects of reducing the toughness. If the content of Ti and Co is low, these elements can be handled as the inevitable impurities. However, Ti and Co serve to improve the creep strength of the weld metal. To improve the creep strength, Ti and Co can be positively added as long as the above-mentioned adverse effects made by these elements are allowable.

### [Other Embodiments of Welding Wire]

As mentioned above, Ti and Co serve to improve the creep strength. Thus, in other embodiments of a welding wire, at least one of Ti and Co can also be included in the predetermined content.

According to another embodiment, a welding wire can further include, in percent by mass, in addition to the above basic components, Ti: 0.010 to 0.030%.

### (Ti: 0.010 to 0.030%)

Ti is not essential, but forms fine carbonitrides during the solidification process and the PWHT in welding, thereby improving the creep strength. If the Ti content is excessively small, the effects inherent in Ti cannot be sufficiently obtained. If the Ti content is excessively large, the strength of the weld metal drastically increases to degrade the toughness thereof. When intended to further increase the creep strength, the Ti content may be preferably set at 0.010 to 0.030%.

In another form of the welding wire in another embodiment, a welding wire can further include, in percent by mass, in addition to the above basic components: Co: 0.10 to 0.75%. Note that Co can be added to the above-mentioned basic components, together with Ti, or can be added alone thereto.

### (Co: 0.10 to 0.75%)

Cobalt (Co) is not essential, but serves as an austenite stabilizing element. Thus, Co can prevent the δ ferrite phase from remaining in the weld metal, thereby improving the creeping strength thereof. If the Co content is excessively small, the effects inherent in Co cannot be exhibited. If the Co content is excessively large, the strength of the weld metal drastically increases to degrade the toughness thereof. When intended to further increase the creep strength, the Co content may be preferably set at 0.10 to 0.75%, and more preferably 0.10 to 0.50%.

The composition of the welding wire in the present invention can be controlled, for example, by appropriately adjusting the amount of an element added when dissolving raw material. The content of inevitable impurities can be adjusted (restricted) by smelting bare metal by the well-known method.

### (Solid Wire)

### (Welding Rod)

The welding wire in the present invention is preferably a solid wire or a welding rod. The welding wire configured in this way can be preferably used for welding a high-Cr ferritic heat-resistant steel. The solid wire or welding rod can be manufactured by adjusting the composition of raw material as mentioned above and then molding under prevailing conditions with general equipment.

### [Examples]

The features of the present invention will be specifically described with reference to examples exhibiting the effects of the present invention and Comparative Examples not exhibiting them.

### <1. Consideration about GTAW>

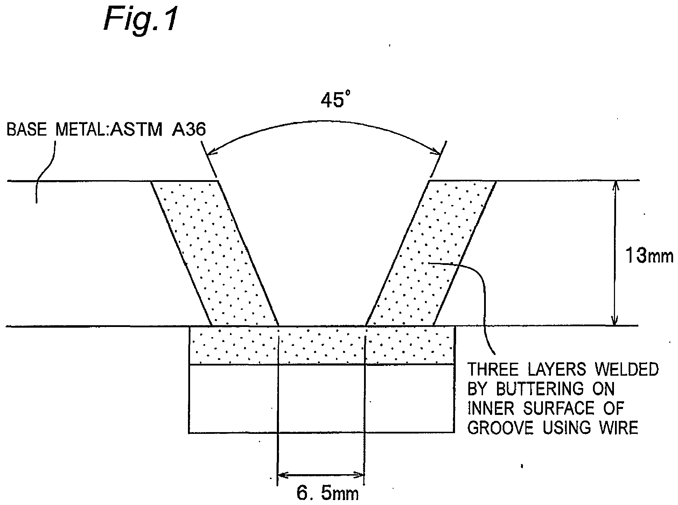

Wires for gas shield arc welding (hereinafter simply referred to as "wires") were produced to have the chemical compositions indicated by wires No. 1 to 41 shown in Table 1. GTAW was performed using the wires No. 1 to 41 and test plates each having the shape of a groove shown in Fig. 1, under the welding conditions shown in Table 2. Then, each welding test material undergoing the GTAW was subjected to PWHT (760°C × 4 hours). A visual inspection and a radiographic test were performed on the welding test plates to evaluate the soundness of each weld zone, as well as to evaluate the toughness and creep strength of all-weld-metal for each test plate. The respective evaluation processes were carried out in the following ways.

Note that there are various forms of wires to be tested, but in the evaluation of various properties of all-weld-metals, a spool wire having a diameter of 1.2 mm was used as a typical one.

### (Visual Inspection Test)

In the visual inspection test, samples with no visual defect were rated "A", and samples with any visual defect were rated "B". The samples rated as "A" were determined to be satisfactory, while the samples rated as "B" were determined to be unsatisfactory.

### (Radiographic Test)

The radiographic test was performed in accordance with ASTM E1032, and a judgment criterion was set based on ASME SFA-5.28 ("11. Radiographic Test").

In the radiographic test, samples satisfying the judgment criterion based on ASME SFA-5.28 were rated as "A", and samples not satisfying were rated as "B". The samples rated as "A" were determined to be satisfactory, while the samples rated as "B" were determined to be unsatisfactory.

### (Creep Strength)

To evaluate the creep strength of all-weld-metal samples, a creep test was performed.

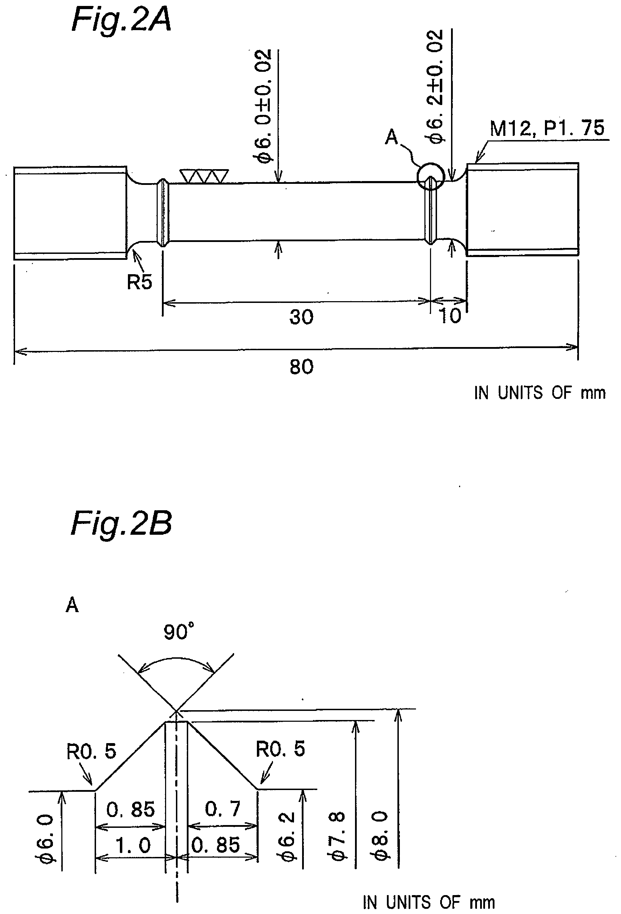

In evaluation of the creep strength of the all-weld-metal samples, a creep test specimen was sampled from the center in the thickness direction of the weld metal, in a welding line direction (each test specimen having a diameter of 6.0 mm and a length of a parallel of 30.0 mm). Figs. 2A and 2B illustrate the shape of the creep test specimen.

The creep test was performed at a testing temperature of 650°C under an initial load stress of 100 MPa. Samples having a creep rupture time (Tr) of 2,500 hours or more were rated as "A", samples having a creep rupture time of 1,500 hours or more and less than 2,500 hours as "B", and samples having a creep rupture time of less than 1,500 hours as "C". The samples rated as "A" and "B" were determined to be satisfactory, while the samples rated as "C" were determined to be unsatisfactory.

### (Toughness)

To evaluate the toughness of all-weld-metal samples, a Charpy impact test was performed.

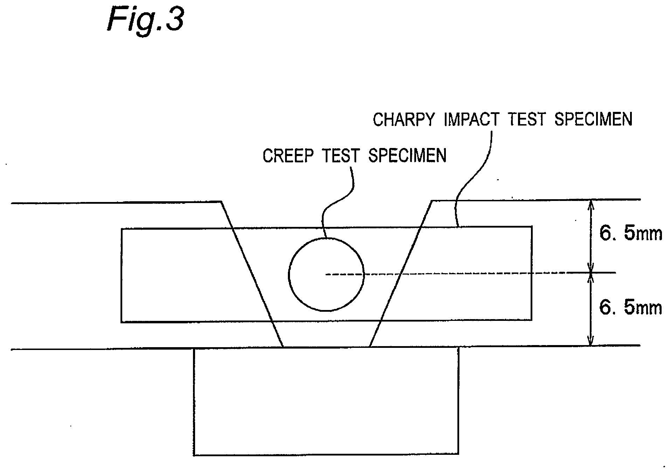

In evaluation of the toughness of the all-weld-metal samples, a Charpy impact test specimen of 10 mm square with a 2 mm-V notch (side notch) was sampled according to AWS B4.0 from the center in the thickness direction of the weld metal, in normal direction to a welding line(joint direction). The Charpy impact test was performed at a testing temperature of 20°C and repeated three times, thereby obtaining an average of measurements. Fig. 3 illustrates test-specimen sampling positions of the Charpy impact test specimens and the creep test specimens. The toughness of all-weld-metal test samples was evaluated by averaging three absorbed energies (vE20°C) in the Charpy impact test at 20°C. Samples having an average absorbed energy of 114 J or more was rated as "A", samples having an average absorbed energy of 76 J or more and less than 114 J as "B", and samples having an average absorbed energy of less than 76J as "C". The samples rated as "A" and "B" were determined to be satisfactory, while the samples rated as "C" were determined to be unsatisfactory.

### (Resistance to Hot Cracking (Crater Cracking Test))

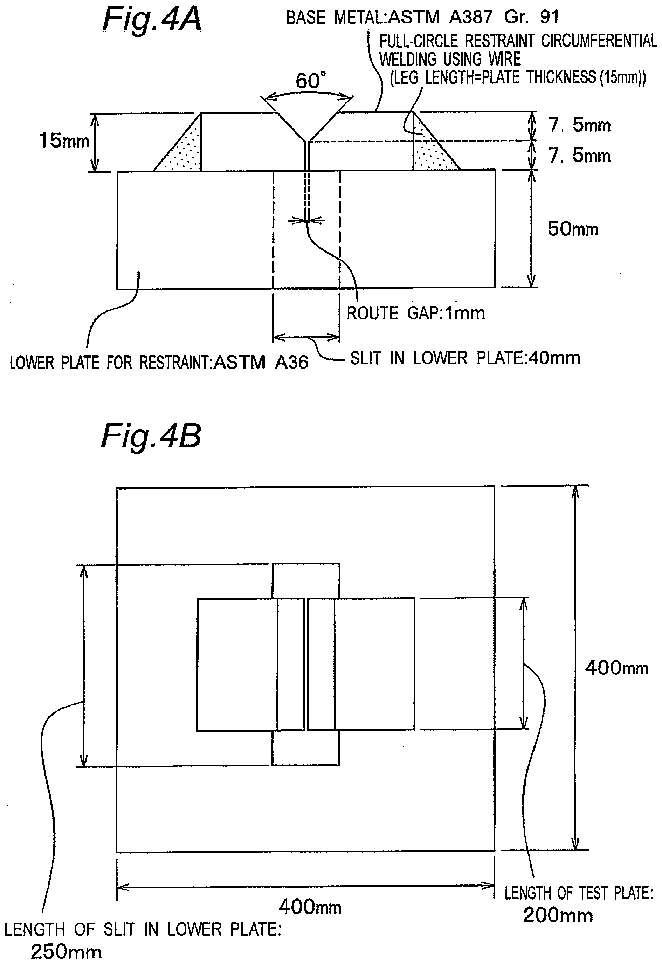

The resistance to hot cracking of each wire was evaluated in the following way. The GTAW tends to have the problem of occurrence of crater cracking, especially, in a first layer. For this reason, one path welding was performed using a test plate with the shape of a groove shown in Figs. 4A and 4B while simulating a GTAW of the first layer on a pipe under the welding conditions shown in Table 3, and then the presence or absence of crater cracking was checked. The evaluation test for the resistance to hot cracking was performed using a cut line having a diameter of 2.4 mm in the wire made of the chemical components shown in Table 1. In detail, the evaluation test for the resistance to hot cracking involved first forming five welding beads of about 30 mm in length in the test specimen of 200 mm in length (that is, the test was repeated five times, or N = 5). Among these five welding beads, samples with no crater cracking were rated as "A", samples with one or two crater cracks as "B", and samples with three or more crater cracks as "C". The samples rated as "A" and "B" were determined to be satisfactory, while the samples rated as "C" were determined to be unsatisfactory.

In the case of the GTAW, the results of the visual inspection test, the radiographic test, the crater cracking test, the Charpy impact test, and the creep test were shown in Table 4. When totally judging these results, the comprehensive evaluations based on three rates of A, B, and C were also shown in Table 4. Note that the samples rated as "A" were determined to be totaly particularly superior, the samples rated as "B" to be totally superior, and the samples as rated as "C" to be totally inferior.

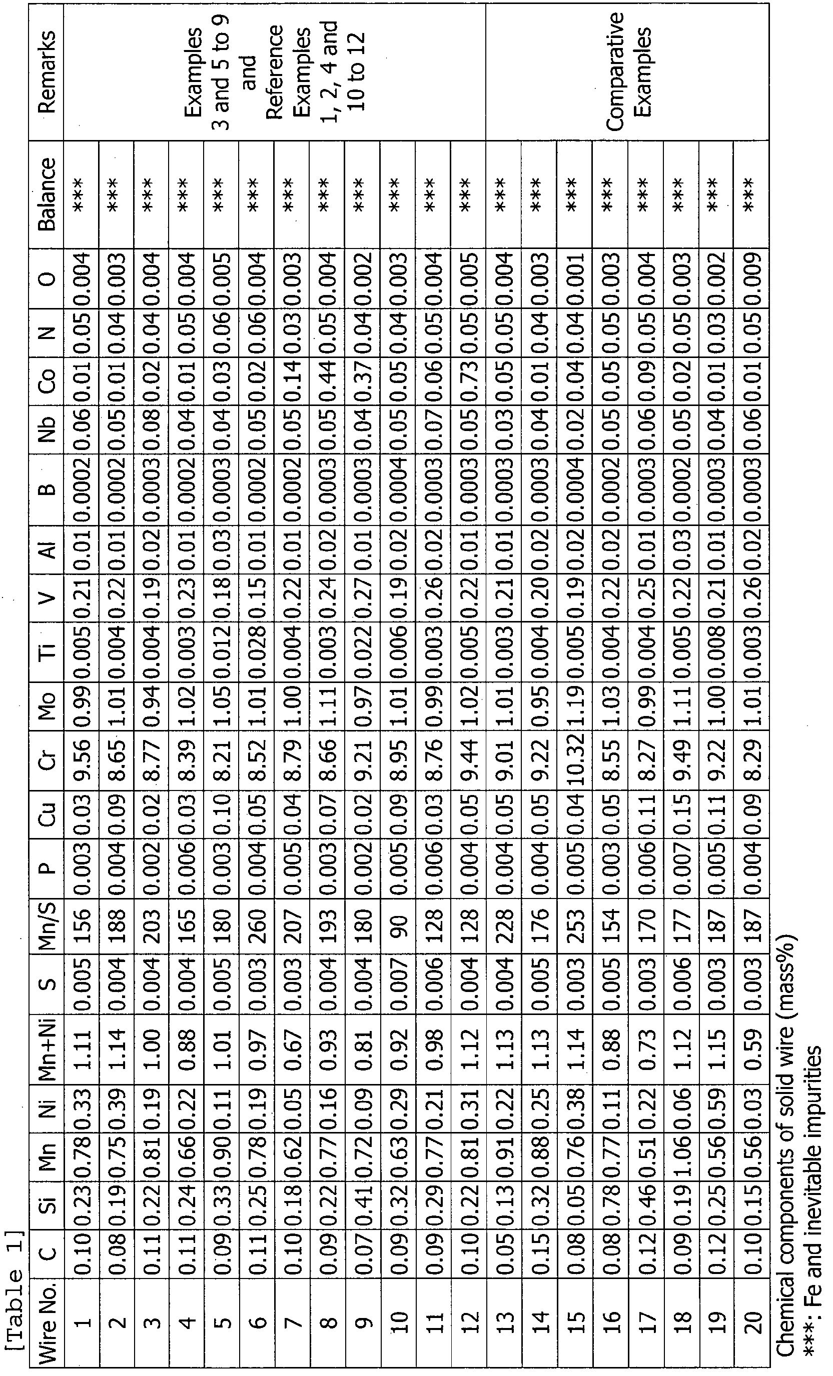

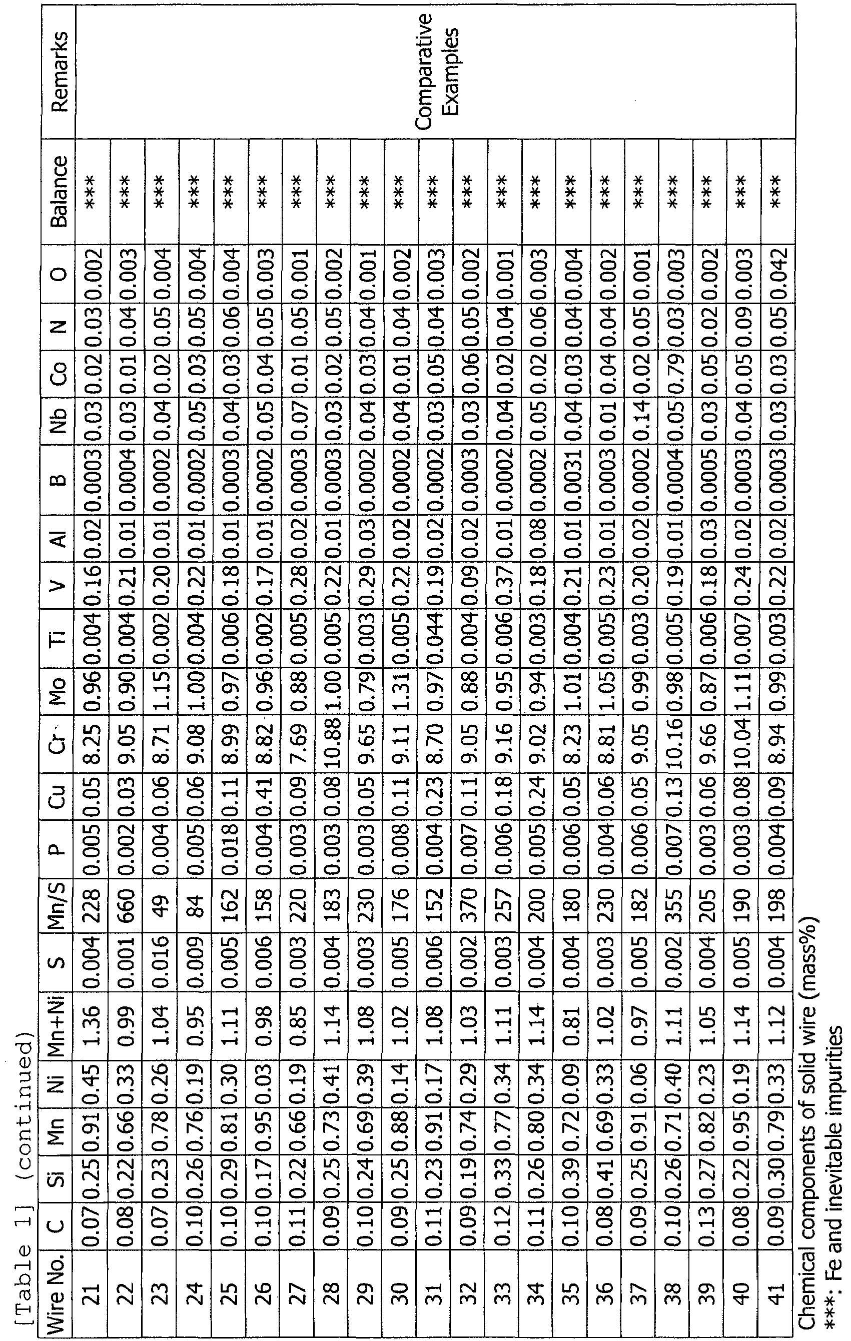

**[Table 2]**

| Power source polarity | Wire diameter | Wire form | Welding current | Arc voltage | Welding speed | Welding amount | Preheating-interpass temperature |
|---|---|---|---|---|---|---|---|
| DCEN | 1.2mm | Spool wire | 250 A | 13V | 10 cpm | 15 g/min. | 220-250°C |
| | | | | | | | |

| Shield gas composition | | Shield-gas flow rate | Crater processing current | | Crater-processing arc voltage | | Crater processing time |
|---|---|---|---|---|---|---|---|
| 100%-Ar | | Inner/Outer: 20 L/min. | 80A | | 11 V | | 5 s |

**[Table 3]**

| Power source polarity | Wire diameter | Wire form | Welding current | Arc voltage | Welding speed | Welding amount | Preheating-interpass temperature |
|---|---|---|---|---|---|---|---|
| DCEN | 2.4mm | Cut line | 180 A | 13 V | About 10 cpm | About 8 g/min. | 220-250°C |
| | | | | | | | |

| Shield gas composition* | | Shield-gas flow rate* | Crater processing current | | Crater-processing arc voltage | | Crater processing time |
|---|---|---|---|---|---|---|---|
| 100%-Ar | | 20 L/min. | 80 A | | 11 V | | 5 s |

| | | | | | | | |
|---|---|---|---|---|---|---|---|
| *Back shield had the same conditions as mentioned above. | | | | | | | |

**[Table 4]**

| Wire No | Visual inspection test result | Radiographic test result | Crater cracking test result (Evaluation test result of resistance to hot cracking) | Charpy impact test result | | Creep test result | | Comprehensive evaluation | Notes |
|---|---|---|---|---|---|---|---|---|---|
| | | | | vE20°C [J] | Judgment | Tr [h] | Judgment | | |
| 1 | B | B | A | 176 | A | 2,238 | B | B | Examples 3 and 5 to 9 and Reference Examples 1, 2, 4 and 10 to 12 |
| 2 | B | B | A | 198 | A | 1,981 | B | B | |
| 3 | B | B | A | 188 | A | 2,551 | A | A | |
| 4 | B | B | A | 201 | A | 1,736 | B | B | |
| 5 | B | B | A | 112 | B | 3,469 | A | A | |
| 6 | B | B | A | 98 | B | 3,882 | A | A | |
| 7 | B | B | A | 166 | A | 2,791 | A | A | |
| 8 | B | B | A | 143 | A | 2,569 | A | A | |
| 9 | B | B | A | 151 | A | 3,872 | A | A | |
| 10 | B | B | B | 169 | A | 2,683 | A | B | |
| 11 | B | B | B | 199 | A | 2,115 | B | B | |
| 12 | B | B | B | 83 | B | 2,571 | A | B | |
| 13 | B | B | B | 169 | A | 862 | C | C | Comparative Examples |
| 14 | B | B | C | 69 | C | 3,621 | A | C | |
| 15 | C (Poor fitness) | C (Fusion failure) | B | 71 | C | 1,489 | C | C | |
| 16 | B | B | B | 73 | C | 1,692 | B | C | |
| 17 | B | B | B | 65 | C | 1,333 | C | C | |
| 18 | B | B | B | 159 | A | 1,024 | C | C | |
| 19 | B | B | C | 201 | A | 835 | C | C | |
| 20 | B | B | B | 71 | C | 2,896 | A | C | |
| 21 | B | B | B | 186 | A | 1,454 | C | C | |
| 22 | C (Poor fitness) | C (Fusion failure) | B | 195 | A | 2,166 | B | C | |
| 23 | B | B | C | 68 | C | 1,788 | B | C | |
| 24 | B | B | C | 118 | B | 1,987 | B | C | |
| 25 | B | B | C | 70 | C | 2,121 | B | C | |
| 26 | B | B | B | 74 | C | 1,897 | B | C | |
| 27 | B | B | B | 188 | A | 814 | C | C | |
| 28 | B | B | C | 112 | B | 1,334 | C | C | |
| 29 | B | B | B | 189 | A | 1,265 | C | C | |
| 30 | B | B | B | 63 | C | 2,677 | A | C | |
| 31 | B | B | B | 42 | C | 4,887 | A | C | Comparative Examples |
| 32 | B | B | B | 195 | A | 1,251 | C | C | |
| 33 | B | B | B | 71 | C | 2,611 | A | C | |
| 34 | C (Slag occurrence) | B | B | 65 | C | 1,304 | C | C | |
| 35 | B | B | C | 177 | A | 3,677 | A | C | |
| 36 | B | B | B | 203 | A | 1,099 | C | C | |
| 37 | B | B | B | 58 | C | 3,078 | A | C | |
| 38 | B | B | B | 69 | C | 2,015 | B | C | |
| 39 | B | B | B | 172 | A | 1,196 | C | C | |
| 40 | B | C (Blowhole) | B | 73 | C | 2,951 | A | C | |
| 41 | C (Slag occurrence) | B | B | 43 | C | 1,748 | B | C | |

As can be seen from the evaluation results shown in Table 4, the use of the wires No. 3 and 5 to 9 of the present invention and wires No. 1, 2, 4 and 10 to 12, produced the sound weld zone and attained the excellent creep strength and toughness after the PWHT without causing any hot cracking during welding. Any of these wires obtained the total result rated as "A" or "B" (in the examples).

On the contrary, the use of the wires No. 13 to 41 that did not include any one of the specific features of the present invention (or did not satisfy the requirements of the present invention) had any one of the following disadvantages, including formation of unsatisfactory weld zone, occurrence of hot cracking during welding, and degradation in at least one of the creep strength and the toughness after the PWHT. Any of these wires obtained the total result rated as "C" (in the comparative examples). Specifically, the following results were revealed.

The wire No. 13 had a small content of C, whereby the creep test result thereof became unsatisfactory.

The wire No. 14 had a large content of C, whereby the crater cracking test result thereof as well as the Charpy impact test result thereof became unsatisfactory.

The wire No. 15 had a small content of Si, so that the fitness of the weld bead became deteriorated, making the visual inspection test result unsatisfactory, and that the fusion failure occurred in the weld metal, also making the radiographic test result unsatisfactory. The wire No. 15 had unsatisfactory results of the Charpy impact test and the creep test.

The wire No. 16 had a large content of Si, whereby the Charpy impact test result thereof became unsatisfactory.

The wire No. 17 had a small content of Mn, whereby the Charpy impact test result thereof as well as the creep test result thereof became unsatisfactory.

The wire No. 18 had a large content of Mn, whereby the creep test result thereof became unsatisfactory.

The wire No. 19 had a large content of Ni, whereby the crater cracking test result thereof as well as the creep test result thereof became unsatisfactory.

In the wire No. 20, the total of Mn content and Ni content (which is represented by "Mn + Ni" in Table 1) was so small that the Charpy impact test result thereof became unsatisfactory. In the wire No. 21, the total of Mn content and Ni content was so large that the creep test result thereof became unsatisfactory.

The wire No. 22 had a small content of S, so that the fitness of the weld bead became deteriorated, making the visual inspection test result thereof unsatisfactory, and that the fusion failure occurred in the weld metal, also making the radiographic test result thereof unsatisfactory.

In the wire No. 23, the S content was so large, and the ratio of Mn content to the S content (which is represented by "Mn/S" in Table 1) was so small that the crater cracking test result thereof as well as the Charpy impact test result thereof became unsatisfactory.

In the wire No. 24, the ratio of the Mn content to the S content was so small that the crater cracking test result thereof became unsatisfactory.

The wire No. 25 had a large content of P, whereby the crater cracking test result thereof as well as the Charpy impact test result thereof became unsatisfactory.

The wire No. 26 had a large content of Cu, whereby the Charpy impact test result thereof became unsatisfactory.

The wire No. 27 had a small content of Cr, whereby the creep test result thereof became unsatisfactory.

The wire No. 28 had a large content of Cr, whereby the crater cracking test result thereof as well as the creep test result thereof became unsatisfactory.

The wire No. 29 had a small content of Mo, whereby the creep test result thereof became unsatisfactory.

The wire No. 30 had a large content of Mo, whereby the Charpy impact test result thereof became unsatisfactory.

The wire No. 31 had a large content of Ti, whereby the Charpy impact test result thereof became unsatisfactory.

The wire No. 32 had a small content of V, whereby the creep test result thereof became unsatisfactory.

The wire No. 33 had a large content of V, whereby the Charpy impact test result thereof became unsatisfactory.

The wire No. 34 had a large content of Al, causing slags, whereby the visual inspection test result thereof became unsatisfactory, and further the Charpy impact test result thereof as well as the creep test result thereof became unsatisfactory.

The wire No. 35 had a large content of B, whereby the crater cracking test result thereof became unsatisfactory.

The wire No. 36 had a small content of Nb, whereby the creep test result thereof became unsatisfactory.

The wire No. 37 had a large content of Nb, whereby the Charpy impact test result thereof became unsatisfactory.

The wire No. 38 had a large content of Co, whereby the Charpy impact test result thereof became unsatisfactory.

The wire No. 39 had a small content of N, whereby the creep test result thereof became unsatisfactory.

The wire No. 40 had a large content of N, causing blowholes, whereby the radiographic test result thereof became unsatisfactory, and further the Charpy impact test result thereof became unsatisfactory.

The wire No. 41 had a large content of O, causing slags, whereby the visual inspection test result thereof became unsatisfactory, and further the Charpy impact test result thereof also became unsatisfactory.

### <2. Consideration about GMAW>

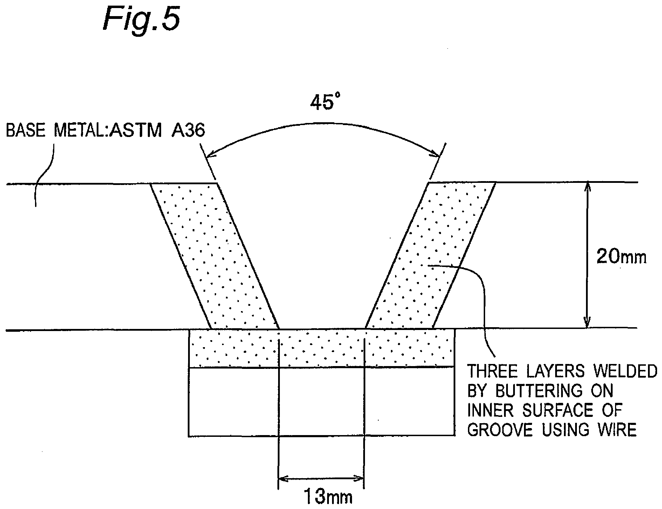

Wires No. 1 to 12 having the chemical compositions shown in Table 1 were produced. GMAW was performed using the wires No. 1 to 12 and test plates each having the shape of a groove shown in Fig. 5, under the welding conditions shown in Table 5. Then, each welding test material undergoing the GMAW was subjected to PWHT (760°C × 4 hours). A visual inspection test and a radiographic test were performed to evaluate the soundness of the weld zone, as well as to evaluate the toughness and creep strength of all-weld-metal for each test plate.

Note that there are various forms of wires as material to be tested, but in the evaluation of various properties of the all-weld-metals, a spool wire having a diameter of 1.2 mm was used as a typical wire for the tests.

### (Visual Inspection Test)

The results of the visual inspection test were evaluated based on the same judgment criterion as that used for consideration about the GTAW.

### (Radiographic Test)

The radiographic test was performed in accordance with ASTM E1032, and a judgment criterion therefor was based on ASME SFA-5.28 ("11. Radiographic Test").

In the radiographic test, samples satisfying the judgment criterion of the ASME SFA-5.28 were rated as "A", and samples not satisfying the judgment criterion were rated as "B". The samples rated as "A" were determined to be satisfactory, while the samples rated as "B" were determined to be unsatisfactory.

### (Creep Strength)

To evaluate the creep strength of all-weld-metal samples, a creep test was performed.

In evaluation of the creep strength of the all-weld-metal samples, a creep test specimen was sampled from the center in the thickness direction of the weld metal, in a welding line direction (each test specimen having a diameter of 6.0 mm and a length of a parallel part of 30.0 mm). Note that the shape of the creep test specimen was set to the same as that mentioned above.

The creep test was performed at a testing temperature of 650°C under an initial load stress of 100 MPa. Samples having a creep rupture time of 800 hours or more were rated as "A", and samples having a creep rupture time of less than 800 hours were rated as "B". The samples rated as "A" were determined to be satisfactory, while the samples rated as "B" were determined to be unsatisfactory.

### (Toughness)

To evaluate the toughness of all-weld-metal samples, a Charpy impact test was performed.

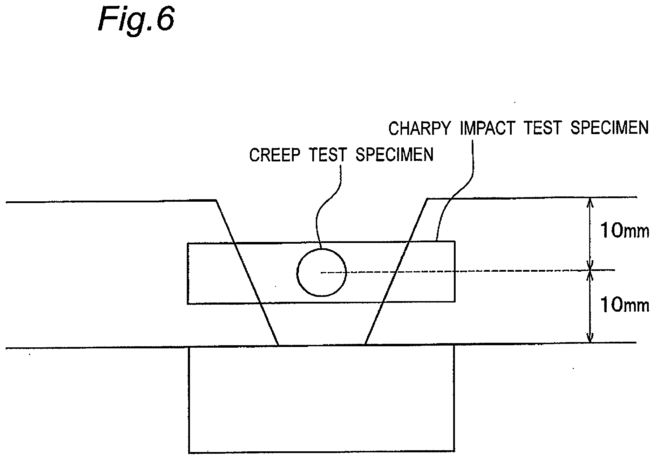

In evaluation of the toughness of the all-weld-metal samples, a Charpy impact test specimen of 10 mm square with a 2mm-V notch (side notch) was sampled according to AWS B4.0 from the center in the thickness direction of the weld metal, in normal direction to a welding line (joint direction). The Charpy impact test was performed at a testing temperature of 20°C and repeated three times, thereby obtaining an average of measurements. Fig. 6 illustrates test-specimen sampling positions of the Charpy impact test specimens and the creep test specimens.

The toughness of all-weld-metal test samples was evaluated by averaging three absorbed energies in the Charpy impact test at 20°C(vE20°C). Samples having an average absorbed energy of 38 J or more were rated as "A", and samples having an average absorbed energy of less than 38 J as "B". The samples rated as "A" were determined to be satisfactory, while the samples rated as "B" were determined to be unsatisfactory.

### (Resistance to Hot Cracking)

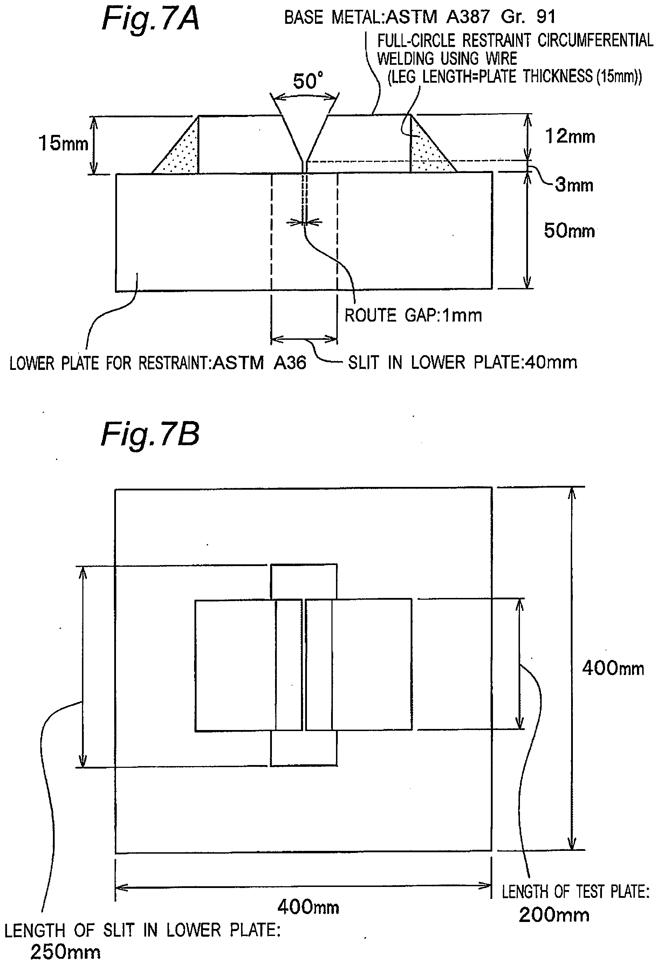

The resistance to hot cracking of each wire was evaluated in the following way. The GMAW tends to have the problem of occurrence of hot cracking at the surface and the inside of a weld bead. For this reason, one path welding was performed using each test plate with the shape of a groove shown in Figs. 7A and 7B, simulating the GMAW in the groove of the pipe under the same welding conditions as mentioned above in Table 5. The visual inspection test and the penetrant test were performed to check the presence or absence of hot cracking at the surface of the weld bead. Simultaneously, the presence or absence of hot cracking inside the weld bead was also checked by the radiographic test, which is mentioned in the paragraph "1. Consideration about GTAW".

Note that the penetrant test was performed according to JIS Z2343-1.

Samples having no defects in the visual inspection test, the penetrant test, and the radiographic test were rated as "A", and samples having any defect were rated as "B". The samples rated as "A" were determined to be satisfactory, while the samples rated as "B" were determined to be unsatisfactory.

In the case of the GMAW, the results of the visual inspection test, the radiographic test, the penetrant test, the Charpy impact test, and the creep test are shown in Table 6. Like Table 4, these results were totally determined and classified into two levels, namely, "A" and "B".

**[Table 5]**

| Power source polarity | Wire diameter | Wire form | Welding current | Arc voltage | Welding speed | Preheating-interpass temperature | |
|---|---|---|---|---|---|---|---|
| DCEP | 1.2 mm | Spool wire | 260 A | 30 V | About 35 cpm | 220-250°C | |
| | | | | | | | |

| Shield gas composition | | Shield-gas flow rate | Crater processing current | | Crater-processing arc voltage | | Crater processing time |
|---|---|---|---|---|---|---|---|
| Ar-20%CO₂ | | 20 L/min. | 90 A | | 28 V | | 5s |

**[Table 6]**

| Wire No. | Visual inspection test result | Radiographic test result (Evaluation test result of resistance to hot cracking) | Penetrant test result (Evaluation test result of resistance to hot cracking) | Charpy impact test result | | Creep test result | | Comprehensive evaluation |
|---|---|---|---|---|---|---|---|---|
| | | | | vE20°C [J] | Judgment | Tr [h] | Judgment | |
| 1 | B | B | B | 55 | B | 863 | B | B |
| 2 | B | B | B | 61 | B | 831 | B | B |
| 3 | B | B | B | 49 | B | 902 | B | B |
| 4 | B | B | B | 53 | B | 868 | B | B |
| 5 | B | B | B | 47 | B | 1,329 | B | B |
| 6 | B | B | B | 42 | B | 1,784 | B | B |
| 7 | B | B | B | 66 | B | 1,021 | B | B |
| 8 | B | B | B | 71 | B | 1,143 | B | B |
| 9 | B | B | B | 39 | B | 1,571 | B | B |
| 10 | B | B | B | 51 | B | 891 | B | B |
| 11 | B | B | B | 57 | B | 905 | B | B |
| 12 | B | B | B | 42 | B | 1,156 | B | B |

As can be seen from the evaluation results shown in Table 6, the use of the wires No. 3 and 5 to 9 of the present invention and wires No. 1, 2, 4 and 10 to 12, produced the sound weld zone and attained the excellent creep strength and toughness after the PWHT without causing any hot cracking during welding, regardless of the welding method. Any of these wires No. 1 to 12 was totally determined to be rated as "A", that is, satisfactory (Examples and Reference Examples).

## Claims

1. A wire for gas shield arc welding, consisting of in percent by mass:
C: 0.07 to 0.13%;
Si: 0.10 to 0.50%;
Mn: 0.55 to 1.00%;
S: 0.002 to 0.010%;
Cr: 8.00 to 10.50%;
Mo: 0.85 to 1.20%;
V: 0.15 to 0.30%;
Nb: 0.02 to 0.10%;
N: 0.03 to 0.07%;
Ni: 0.20% or less;
P: 0.010% or less;
Cu: 0.30% or less;
Al: 0.04% or less;
B: 0.0015% or less; and
O: 0.030% or less; and optionally,
Sn: 0.015% or less;
As: 0.015% or less;
Sb: 0.015% or less;
Pb: 0.0015% or less;
Bi: 0.015% or less;
Ti: 0.010 to 0.030%; and
Co: 0.10 to 0.75%,
and with the balance being Fe and inevitable impurities,
wherein a total of the Mn content and the Ni content is in a range of 0.60 to 1.15%, and
wherein a ratio of the Mn content to the S content is 87 or more.

2. The wire according to Claim 1, wherein the ratio of the Mn content to the S content is 150 or more.

3. The wire according to Claim 1 or 2, wherein the C content is in a range of 0.08 to 0.11%.

4. The wire according to any one of Claims 1 to 3, wherein the Cr content is in a range of 8.21 to 10.50%.

5. The wire according to any one of Claims 1 to 4, wherein the total of the Mn content and the Ni content is in a range of 0.70 to 1.00%.

6. The wire according to any one of Claims 1 to 5, wherein the Cu content is 0.10% or less.

7. The wire according to any one of Claims 1 to 6, wherein the Al content is 0.03% or less.

8. The wire according to any one of Claims 1 to 7, wherein the N content is in a range of 0.04 to 0.07%.

## Patentansprüche

1. Draht zum Schutzgas-Lichtbogenschweißen, bestehend aus, in Masse-Prozent:
C: 0,07 bis 0,13%;
Si: 0,10 bis 0,50%;
Mn: 0,55 bis 1,00%;
S: 0,002 bis 0,010%;
Cr: 8,00 bis 10,50%;
Mo: 0,85 bis 1,20%;
V: 0,15 bis 0,30%;
Nb: 0,02 bis 0,10%;
N: 0,03 bis 0,07%;
Ni: 0,20% oder weniger;
P: 0,010% oder weniger;
Cu: 0,30% oder weniger;
Al: 0,04% oder weniger;
B: 0,0015% oder weniger; und
O: 0,030% oder weniger; und gegebenenfalls
Sn: 0,015% oder weniger;
As: 0,015% oder weniger;
Sb: 0,015% oder weniger;
Pb: 0,0015% oder weniger;
Bi: 0,015% oder weniger;
Ti: 0,010 bis 0,030%; und
Co: 0,10 bis 0,75%,
wobei der Rest Fe und unvermeidbare Verunreinigungen sind,
wobei eine Gesamtheit des Mn-Anteils und des Ni-Anteils in einem Bereich von 0,60 bis 1,15% ist und wobei ein Verhältnis des Mn-Anteils zu dem S-Anteil 87 oder mehr beträgt.

2. Draht gemäß Anspruch 1, wobei das Verhältnis des Mn-Anteils zu dem S-Anteil 150 oder mehr beträgt.

3. Draht gemäß Anspruch 1 oder 2, wobei der C-Anteil in einem Bereich von 0,08 bis 0,11% ist.

4. Draht gemäß einem der Ansprüche 1 bis 3, wobei der Cr-Anteil in einem Bereich von 8,21 bis 10,50% ist.

5. Draht gemäß einem der Ansprüche 1 bis 4, wobei die Gesamtheit des Mn-Anteils und des Ni-Anteils in einem Bereich von 0,70 bis 1,00% ist.

6. Draht gemäß einem der Ansprüche 1 bis 5, wobei der Cu-Anteil 0,10% oder weniger beträgt.

7. Draht gemäß einem der Ansprüche 1 bis 6, wobei der Al-Anteil 0,03% oder weniger beträgt.

8. Draht gemäß einem der Ansprüche 1 bis 7, wobei der N-Anteil in einem Bereich von 0,04 bis 0,07% ist.

## Revendications

1. Fil pour soudage à l'arc sous protection gazeuse, constitué, en pourcent en masse, de :
C : 0,07 à 0,13 %;
Si : 0,10 à 0,50%;
Mn : 0,55 à 1,00 %;
S : 0,002 à 0,010 %;
Cr : 8,00 à 10,50 %;
Mo : 0,85 à 1,20 %;
V : 0,15 à 0,30 %;
Nb : 0,02 à 0,10 %;
N : 0,03 à 0,07 % ;
Ni : 0,20 % ou moins ;
P : 0,010 % ou moins ;
Cu : 0,30 % ou moins ;
Al : 0,04 % ou moins ;
B : 0,0015 % ou moins ; et
O : 0,030 % ou moins ; et en option,
Sn : 0,015 % ou moins;
As : 0,015 % ou moins ;
Sb : 0,015 % ou moins;
Pb : 0,0015 % ou moins;
Bi : 0,015 % ou moins ;
Ti : 0,010 à 0,030 % ; et
Co : 0,10 à 0,75 %,
et avec le complément qui est du Fe et des impuretés inévitables,
dans lequel un total de la teneur en Mn et de la teneur en Ni est dans une plage de 0,60 à 1,15 %, et
dans lequel un rapport de la teneur en Mn sur la teneur en S est de 87 ou plus.

2. Fil selon la revendication 1, dans lequel le rapport de la teneur en Mn sur la teneur en S est de 150 ou plus.

3. Fil selon la revendication 1 ou 2, dans lequel la teneur en C est dans une plage de 0,08 à 0,11 %.

4. Fil selon l'une quelconque des revendications 1 à 3, dans lequel la teneur en Cr est dans une plage de 8,21 à 10,50 %.

5. Fil selon l'une quelconque des revendications 1 à 4, dans lequel le total de la teneur en Mn et de la teneur en Ni est dans une plage de 0,70 à 1,00 %.

6. Fil selon l'une quelconque des revendications 1 à 5, dans lequel la teneur en Cu est de 0,10 % ou moins.

7. Fil selon l'une quelconque des revendications 1 à 6, dans lequel la teneur en Al est de 0,03 % ou moins.

8. Fil selon l'une quelconque des revendications 1 à 7, dans lequel la teneur en N est dans une plage de 0,04 à 0,07 %.
